# EUROPEAN PATENT APPLICATION

(11) **EP 2 677 455 A1**
(43) Date of publication of application: **25.12.2013**
(21) Application number: 12172852.1
(22) Date of filing: 21.06.2012
(51) Int. Cl.: G06F 21/60, H02M 3/00

(54) **A user-interface for an electrical power converter**

(71) Applicant: Visedo Oy, 53850 Lappeenranta (FI)
(72) Inventor: TARKIAINEN, Antti, FI-53500 Lappeenranta (FI); KANKAANRANTA, Tommi, FI-53850 Lappeenranta (FI)
(74) Representative: Berggren Oy Ab

(57) **Abstract**

A user-interface for an electrical device comprises an input-section (101) for inputting identification data and verification data, and a processing section (102) connected to the input-section. The processing section is configured to identify, on the basis of the identification data, a sub-set of control parameters of the electrical device from among identifiable sub-sets of the control parameters, to compare the verification data to a password related to the identified sub-set of the control parameters, and to open access to the identified sub-set of the control parameters, if the verification data matches the password. With appropriate policy of sharing passwords related to different control parameters, a manufacturer of the electrical device can control which of the control parameters are accessible by a user of the electrical device.

## Description

### Field of the invention

The invention relates to a user-interface that is suitable for an electrical device. The invention relates also to a method and to a computer program for controlling a user-interface of an electrical device. Furthermore, the invention relates to an electronic power converter and to a mobile working machine comprising an electronic power converter.

### Background

A typical electrical drive system comprises an electrical machine and an electronic power converter connected to the windings of the electrical machine and configured to control the operation of the electrical machine. The electrical machine can be an alternating current machine or a direct current machine. The electronic power converter can be, for example, a frequency converter suitable for supplying an alternating current machine, or a controllable direct voltage supply, e.g. a thyristor bridge, suitable for supplying a direct current machine. The operation of the electrical drive system is configured with the aid of numerous control parameters of the electrical drive system. The control parameters are related to the electrical machine, to the electronic power converter, and/or to other parts of the electrical drive system. The control parameters may comprise, for example, model parameters of the electrical machine, parameters of speed and/or torque controllers, and/or limit value parameters related to overcurrent, overvoltage, and/or overheating protection.

In many cases there is an open question whether or not the control parameters should be accessible by a user of the electrical drive system so that the user is allowed to change the values of the control parameters. On the one hand, an electrical drive system whose control parameters can be changed by the user allows the user to adapt the electrical drive system to different operating conditions and requirements, and thereby an electrical drive system of the kind described above may be a more attractive alternative than a competing electrical drive system in which the control parameters cannot be changed by the user. However, on the other hand, when the user is allowed to change the control parameters, there is naturally a risk that a vital control parameter is accidentally given an erroneous value causing a risk of malfunction and even damages. In a situation of the kind mentioned above, for example warranty issues can be quite complicated and unclear from the juridical viewpoints.

### Summary

The following presents a simplified summary in order to provide a basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

In accordance with the first aspect of the invention, there is provided a new user-interface for an electrical device that can be, for example but not necessarily, an electronic power converter. The user interface according to the invention comprises:
- an input-section for inputting identification data and verification data, and
- a processing section for receiving the inputted identification data and the inputted verification data,
wherein the processing section is configured to:
- identify, on the basis of the identification data, a sub-set of control parameters of the electrical device from among identifiable sub-sets of the control parameters of the electrical device,
- compare the verification data to a password related to the identified sub-set of the control parameters of the electrical device, the password related to the identified sub-set of the control parameters of the electrical device being different from passwords related to others of the identifiable sub-sets of the control parameters of the electrical device, and
- open access to the identified sub-set of the control parameters of the electrical device in response to a situation in which the verification data matches the password.

Each identifiable sub-set of the control parameters is advantageously related to an individual, sub-set specific password. Therefore, the manufacturer of the electrical device can control which of the control parameters are accessible by the user of the electrical device by controlling which of the passwords are given to the user. Each sub-set of the control parameters may comprise one or more of the control parameters. In a case where each sub-set comprises only one control parameter, it is possible to control whether a single control parameter is accessible by the user of the electrical device independently of accessibilities of the other control parameters.

In accordance with the second aspect of the invention, there is provided a new method for controlling a user-interface of an electrical device. The method according to the invention comprises:
- identifying, on the basis of identification data received via the user-interface, a sub-set of control parameters of the electrical device from among identifiable sub-sets of the control parameters of the electrical device,
- comparing verification data received via the user-interface to a password related to the identified sub-set of the control parameters of the electrical device, the password related to the identified sub-set of the control parameters of the electrical device being different from passwords related to others of the identifiable sub-sets of the control parameters of the electrical device, and
- opening access to the identified sub-set of the control parameters of the electrical device in response to a situation in which the verification data matches the password.

In accordance with the third aspect of the invention, there is provided a new electronic power converter. The electronic power converter according to the invention comprises:
- a power stage for supplying voltages to windings of an electrical machine,
- a controller arranged to control the power stage in accordance with control parameters of the electronic power converter, and
- a user-interface according to the invention.

The electronic power converter can be, for example, a frequency converter suitable for supplying an alternating current machine or a controllable direct voltage supply, e.g. a thyristor bridge, suitable for supplying a direct current machine.

In accordance with the fourth aspect of the invention, there is provided a new mobile working machine. The mobile working machine comprises:
- a combustion engine, and
- an electromechanical power transmission chain between the combustion engine and one or more wheels, chain tracks, or other actuators of the mobile working machine,
wherein the electromechanical transmission chain comprises at least one electronic power converter according to the present invention.

The mobile working machine comprises preferably a liquid cooling system arranged to cool both a hydraulic system of the mobile working machine and the electromechanical power transmission chain. The mobile working machine can be, for example, a tractor, a bucket charger, a road drag, a bulldozer, or any other working machine having wheels and/or chain tracks.

In accordance with the fifth aspect of the invention there is provided a new computer program for controlling a user-interface of an electrical device. The computer program comprises computer executable instructions for controlling a programmable processor to:
- identify, on the basis of identification data received via the user-interface, a sub-set of control parameters of the electrical device from among identifiable sub-sets of the control parameters of the electrical device,
- compare verification data received via the user-interface to a password related to the identified sub-set of the control parameters of the electrical device, the password related to the identified sub-set of the control parameters of the electrical device being different from passwords related to others of the identifiable sub-sets of the control parameters of the electrical device, and
- open access to the identified sub-set of the control parameters of the electrical device in response to a situation in which the verification data matches the password.

A computer program product according to the invention comprises a non-volatile computer readable medium, e.g. a compact disc "CD", encoded with a computer program according to the invention.

A number of non-limiting exemplifying embodiments of the invention are described in accompanied dependent claims.

Various non-limiting exemplifying embodiments of the invention both as to constructions and to methods of operation, together with additional objects and advantages thereof, will be best understood from the following description of specific exemplifying embodiments when read in connection with the accompanying drawings.

The verbs "to comprise" and "to include" are used in this document as open limitations that neither exclude nor require the existence of unrecited features. The features recited in depending claims are mutually freely combinable unless otherwise explicitly stated.

### Brief description of the figures

The exemplifying embodiments of the invention and their advantages are explained in greater detail below in the sense of examples and with reference to the accompanying drawings, in which:
figure 1 shows a schematic illustration of an electronic power converter comprising a user-interface according to an exemplifying embodiment of the invention,
figure 2 shows a flow chart of a method according to an exemplifying embodiment of the invention for controlling a user-interface of an electrical device, and
figure 3 shows a schematic illustration of a mobile working machine according to an exemplifying embodiment of the invention.

### Description of the exemplifying embodiments

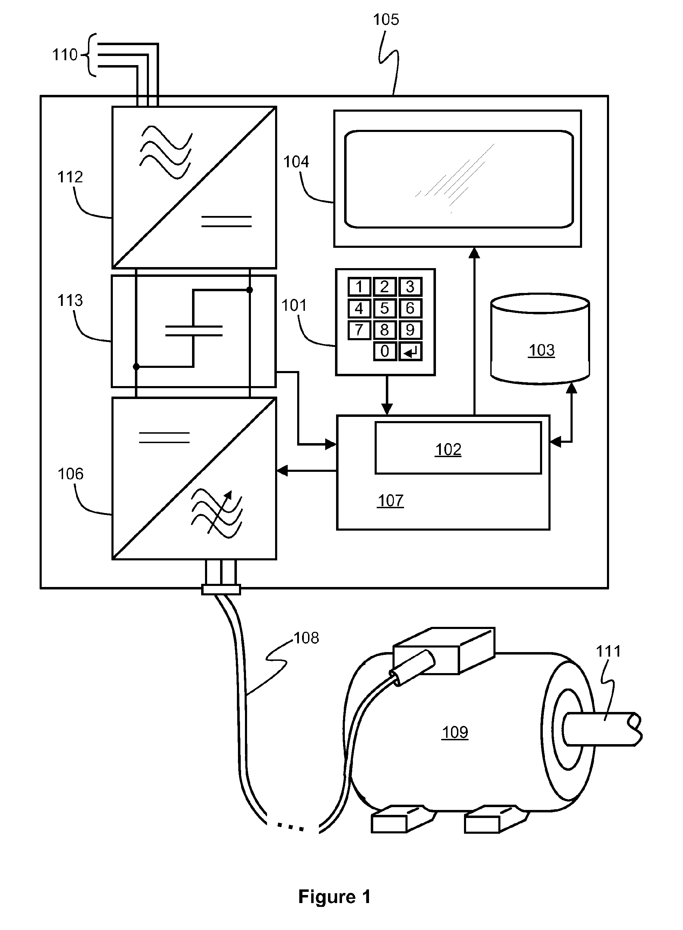

Figure 1 shows a schematic illustration of an electronic power converter 105 comprising a user-interface according to an exemplifying embodiment of the invention. In the exemplifying situation shown in figure 1, the electronic power converter is connected via a cable 108 to the windings of an electrical machine 109. The electronic power converter is connected via a line 110 to an external electrical system, e.g. a generator. The shaft 111 of the electrical machine 109 is connected to an external mechanical system, e.g. a wheel or another actuator of a mobile working machine. The electronic power converter 105 comprises a power stage 106 for supplying voltages to the windings of the electrical machine, and a rectifier stage 112 and an intermediate 113 circuit for transferring power between the line 110 and the power stage 106. The electronic power converter comprises a controller 107 configured to control the power stage 106 in accordance with control parameters of the electronic power converter. The control parameters may comprise, for example, model parameters of the electrical machine 109, parameters of speed and torque controllers, parameters related to the external electrical system connected to the line 110, parameters related to the external mechanical system connected to the shaft 111, and/or limit value parameters related to overcurrent, overvoltage, and/or overheating protection.

The electronic power converter 105 comprises a user-interface that comprises an input-section 101 for inputting data and a processing section 102 connected to the input-section. In the exemplifying case illustrated in figure 1, the input-section 101 comprises a keyboard but the input-section could as well comprise a graphical input-section implemented with a screen and a mouse, a touch sensitive screen, or any other suitable means for receiving data from the user the electronic power converter. The inputted data comprises identification data which identifies a particular sub-set of the control parameters from among various identifiable sub-sets of the control parameters. Furthermore, the inputted data comprises verification data on the basis of which it is determined whether a user who has inputted the identification data and the verification data is entitled to access to the sub-set of the control parameters identified by the identification data. Each sub-set of the control parameters is related to a password, and different sub-sets have preferably different passwords. The entitlement of the user to access to a certain sub-set of the control parameters is determined by comparing the verification data to the password related to this sub-set of the control parameters. The sub-set of the control parameters may comprise only one control parameter, and in this case the identification data can be, for example, the name of the control parameter under consideration. In a case where each of the sub-sets comprises only one control parameter, it is possible to control whether a single control parameter under consideration is accessible by the user of the electronic power converter independently of accessibilities of the other control parameters. The processing section 102 is configured to identify, on the basis of the identification data, the appropriate sub-set of the control parameters from among the identifiable sub-sets of the control parameters. The processing section 102 is configured to compare the verification data to the password related to the identified sub-set of the control parameters. The processing section 102 is configured to open access to the identified sub-set of the control parameters if the verification data matches the password, i.e. if the user is deemed to be entitled to access to the identified sub-set of the control parameters.

The password related to the identified sub-set of the control parameters can be, for example, a result of a mathematic-logical operation directed to seed data comprising at least the identification data which identifies the sub-set of the control parameters under consideration. In a user-interface according to an exemplifying embodiment of the invention, the processing section 102 is configured compose the seed data and to direct the mathematic-logical operation to the seed data so as to generate the password. The seed data may comprise, in addition to the identification data, an identifier of the electronic power converter 105, an identifier of the user, and/or an identifier of a device, e.g. a mobile working machine, comprising the electronic power converter. It is also possible that the seed data comprises calendar data based on a clock system of the electronic power converter or a clock system of the device comprising the electronic power converter. Therefore, the password can be converter-specific, user-specific, device-specific, and/or day-, week-, month-, or year-specific. Therefore, it is possible to arrange a situation in which verification data, which entitles the user to access to a certain control parameter or parameters of the electronic power converter 105, does not entitle the user to access to the corresponding control parameter or parameters of some other electronic power converter that is similar to the electronic power converter 105 but has a different converter identifier. The different converter identifier can be arranged to provide a different password that is not matched by the above-mentioned verification data. Correspondingly, it is possible to arrange a situation in which verification data, which entitles the user to access to a certain control parameter or parameters of the electronic power converter 105, does not entitle another user who has a different user identifier to access to this control parameter or these control parameters of the electronic power converter 105. The different user identifier can be arranged to provide a different password that is not matched by the above-mentioned verification data. It is also possible to arrange a situation in which verification data, which entitles the user to access to a certain control parameter or parameters during e.g. a certain month of a certain year, does not entitle the user to access to this control parameter or these control parameters during the next month. A changed number of a month can be arranged to provide a different password that is not matched by the above-mentioned verification data.

When the user of the electronic power converter 105 wants to have access to some of the control parameters, the user can send a request to a manufacturer or another authorized person or organization, e.g. an importer, who is authorized to grant accesses to the control parameters and knows the mathematic-logical operation. The request may contain, in addition to the identification data, for example an identifier of the electronic power converter 105, an identifier of the user, and/or an identifier of a device comprising the electronic power converter. The manufacturer or the other authorized person or organization, if sees the request appropriate, generates the password using the mathematic-logical operation and the information contained by the request, and then sends the password to the user. Thereafter, the user can obtain access to the control parameter or parameters by using the received password as the verification data.

The above-mentioned mathematic-logical operation can be, for example but not necessarily, a hash function, e.g. the SHA-1 or SHA-2 which are cryptographic hash functions designed by the United States National Security Agency. SHA stands for "Secure Hash Algorithm".

It is also possible that the passwords related to the sub-sets of the control parameters are pre-determined data items recorded in a memory 103. The processing section 102 is configured to retrieve the password related to the identified sub-set of the control parameters from the memory by using the corresponding identification data as addressing information and to compare the retrieved password to the verification data. When the user of the electronic power converter 105 wants to have access to one or more of the control parameters, the user can send a request to a manufacturer or another person or organization which is authorized to grant accesses to the control parameters and has a table of passwords related to the sub-sets of the control parameters. The request identifies the one or more control parameters to which the user wants the access. The manufacturer or the other authorized person or organization, if sees the request appropriate, sends an appropriate password or passwords to the user.

A user-interface according to an exemplifying embodiment of the invention comprises a display 104. The processing section 102 is configured to control the display to show values of the identified sub-set of the control parameters in response to a situation in which the verification data matches the password.

In a user-interface according to an exemplifying embodiment of the invention, the processing section 102 is configured to change, on the basis of update data inputted via the input-section 101, one or more values of the control parameters belonging to the identified sub-set in response to a situation in which the verification data matches the password.

In a user-interface according to an exemplifying embodiment of the invention, the processing section 102 is configured to change the password related to the identified sub-set of the control parameters in response to a situation in which a pre-determined number of changes has been directed to the values of the control parameters belonging to the identified sub-set. The password related to the identified sub-set of the control parameters can be a result of a mathematic-logical operation directed to seed data comprising at least the identification data and the value or values of the one or more control parameters of the identified sub-set, wherein the value or values correspond to a situation in which a change counter has its starting value. The change counter is set back to its starting value when the pre-determined number of changes has been made. When the user of the electronic power converter 105 wants to have access to some of the control parameters, the user can send a request to a manufacturer or another authorized person or organization, e.g. an importer, who is authorized to grant accesses to the control parameters and knows the mathematic-logical operation. The request identifies the one or more control parameters to which the user wants the access, and the request contains the one or more prevailing values of the one or more control parameters under consideration. The manufacturer or the other authorized person or organization, if sees the request appropriate, generates the password using the mathematic-logical operation and the information contained by the request, and then sends the password to the user. Thereafter, the user can obtain access to the control parameter or parameters by using the received password as the verification data. It is possible to arrange a situation in which certain verification data entities the user to direct only a pre-determined number of changes to one or more values of one or more control parameters.

In the exemplifying case illustrated in figure 1, the processing section 102 is implemented with the aid of the same processor hardware as the controller 107 configured to control the power stage 106 in accordance with the control parameters. The processor hardware may comprise one or more programmable processor circuits, one or more dedicated hardware circuits such as an application specific integrated circuit "ASIC", one or more field programmable logic circuits such as a field programmable gate array "FPGA", or a combination of these. It is also possible that the processing section 102 and the controller 107 are separate processor units.

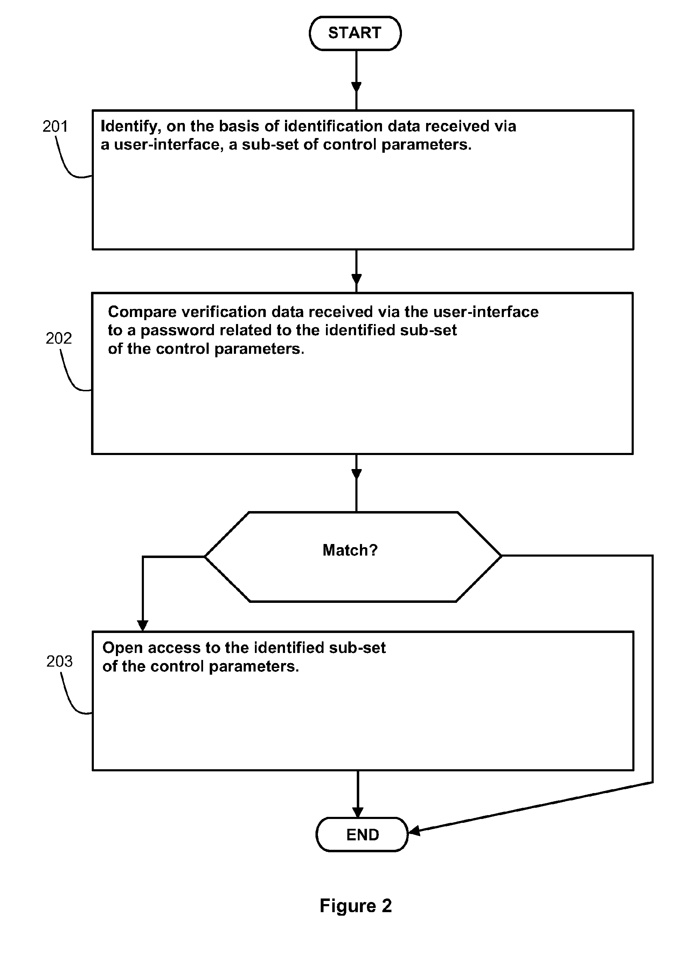

Figure 2 shows a flow chart of a method according to an exemplifying embodiment of the invention for controlling a user-interface of an electrical device. The method comprises the following actions:
- action 201: identifying, on the basis of identification data received via the user-interface, a sub-set of control parameters of the electrical device from among identifiable sub-sets of the control parameters of the electrical device,
- action 202: comparing verification data received via the user-interface to a password related to the identified sub-set of the control parameters of the electrical device, the password related to the identified sub-set of the control parameters of the electrical device being different from passwords related to others of the identifiable sub-sets of the control parameters of the electrical device, and
- action 203: opening access to the identified sub-set of the control parameters of the electrical device in response to a situation in which the verification data matches the password.

In a method according to an embodiment of the invention, each of the identifiable sub-sets of the control parameters of the electrical device contains only one of the control parameters of the electrical device. In this case, it is possible to control whether a single control parameter under consideration is accessible by the user of the electrical device independently of accessibilities of the other control parameters.

In a method according to an embodiment of the invention, the password related to the identified sub-set of the control parameters of the electrical device is a result of a mathematic-logical operation directed to seed data comprising at least the identification data.

A method according to an embodiment of the invention comprises composing the seed data and directing the mathematic-logical operation to the seed data so as to generate the password related to the identified sub-set of the control parameters. Alternatively, the passwords related to the identifiable sub-sets of the control parameters can be pre-stored data items.

In a method according to an embodiment of the invention, the password related to the identified sub-set of the control parameters of the electrical device is dependent on at least one of the following: an identifier of the electrical device, an identifier of the user, calendar data based on a clock system of the electrical device.

In a method according to an embodiment of the invention, the password related to the identified sub-set of the control parameters of the electrical device is a result of a mathematic-logical operation directed to seed data comprising the identification data and at least one of the following: an identifier of the electrical device, an identifier of a user of the electrical device, calendar data based on a clock system of the electrical device.

A method according to an embodiment of the invention comprises controlling a display to show values of the identified sub-set of the control parameters of the electrical device in response to a situation in which the verification data matches the password.

A method according to an embodiment of the invention comprises changing, on the basis of update data received via the user-interface, one or more values of the control parameters belonging to the identified sub-set in response to a situation in which the verification data matches the password.

A method according to an embodiment of the invention comprises changing the password related to the identified sub-set of the control parameters in response to a situation in which a pre-determined number of changes has been directed to the values of the control parameters belonging to the identified sub-set.

A computer program according to an exemplifying embodiment of the invention for controlling a user-interface of an electrical device comprises computer executable instructions for controlling a programmable processor to carry out a method according to any of the above-described exemplifying embodiments of the invention.

A computer program according to an exemplifying embodiment of the invention comprises software modules for controlling a user-interface of an electrical device. The software modules comprise computer executable instructions for controlling the programmable processor to:
- identify, on the basis of identification data received via the user-interface, a sub-set of control parameters of the electrical device from among identifiable sub-sets of the control parameters of the electrical device,
- compare verification data received via the user-interface to a password related to the identified sub-set of the control parameters of the electrical device, the password related to the identified sub-set of the control parameters of the electrical device being different from passwords related to others of the identifiable sub-sets of the control parameters of the electrical device, and
- open access to the identified sub-set of the control parameters of the electrical device in response to a situation in which the verification data matches the password.

The software modules can be, for example, subroutines and functions generated with a suitable programming language.

A computer program product according to an exemplifying embodiment of the invention comprises a non-volatile computer readable medium, e.g. a compact disc "CD", encoded with the above-mentioned software modules.

A signal according to an exemplifying embodiment of the invention is encoded to carry information defining a computer program according to an embodiment of the invention.

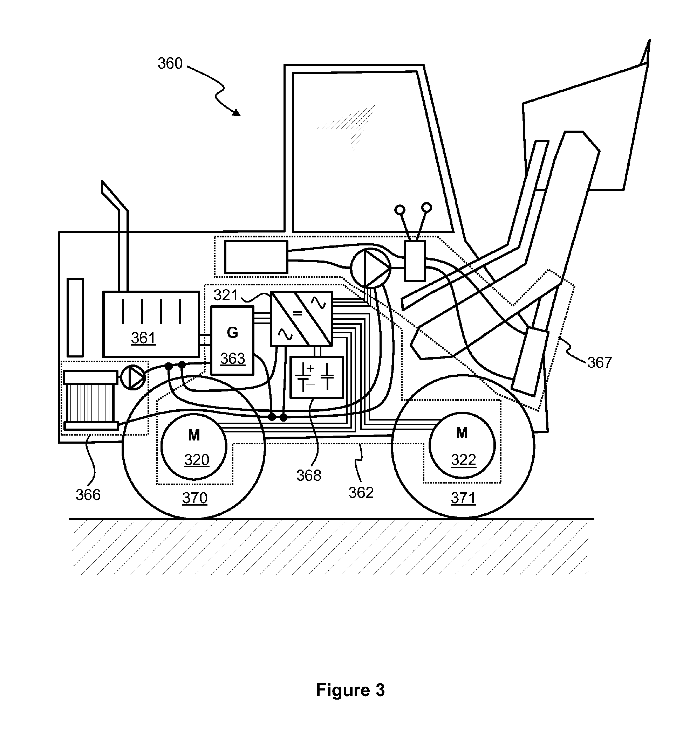

Figure 3 shows an illustration of a mobile working machine 360 according to an exemplifying embodiment of the invention. In this exemplifying case, the mobile working machine is a bucket charger but the mobile working machine could as well be a tractor, a road drag, a bulldozer, or any other working machine having wheels and/or chain tracks. The mobile working machine comprises a combustion engine 361 that can be e.g. a diesel engine, an Otto-cycle engine, or a turbine engine. The mobile working machine comprises an electromechanical power transmission chain 362 between the combustion engine 361 and wheels 370, 371 of the mobile working machine. The electromechanical transmission chain comprises a generator 363 the rotor of which is connected to the shaft of the combustion engine 361. The electromechanical transmission chain comprises an electronic power converter 321 and electrical motors 320, 322 at the hubs of the wheels 370, 371. The electronic power converter 321 is arranged to convert the electrical voltage produced by the generator 363 into electrical voltages having amplitudes and frequencies suitable for the electrical motors 320, 322. The electronic power converter 321 comprises a user-interface that comprises an input-section for inputting identification data and verification data, and a processing section connected to the input-section. The processing section is configured to:
- identify, on the basis of the identification data, a sub-set of control parameters of the electronic power converter 321 from among identifiable sub-sets of the control parameters of the electronic power converter,
- compare the verification data to a password related to the identified sub-set of the control parameters of the electronic power converter, the password related to the identified sub-set of the control parameters of the electronic power converter being different from passwords related to others of the identifiable sub-sets of the control parameters of the electronic power converter, and
- open access to the identified sub-set of the control parameters of the electronic power converter in response to a situation in which the verification data matches the password.

A mobile working machine according to an exemplifying embodiment of the invention comprises a liquid cooling system 366 arranged to cool the electromechanical power transmission chain 362.

A mobile working machine according to an exemplifying embodiment of the invention comprises a liquid cooling system arranged to cool both a hydraulic system 367 of the mobile working machine and the electromechanical power transmission chain 362.

A mobile working machine according to an exemplifying embodiment of the invention comprises a liquid cooling system arranged to cool both the electromechanical power transmission chain 362 and the combustion engine 361.

In a mobile working machine according to an exemplifying embodiment of the invention, the electromechanical power transmission chain 362 comprises a battery and//or a capacitive energy storage 368 arranged to respond to peak power needs exceeding the maximum power of the combustion engine 361. The battery and/or the capacitive energy storage can be connected, for example, to a direct voltage intermediate circuit of the electronic power converter 321.

The specific examples provided in the description given above should not be construed as limiting the applicability and/or interpretation of the appended claims.

## Claims

1. A user-interface for an electrical device, the user interface comprising:
- an input-section (101) for inputting identification data and verification data, and
- a processing section (102) for receiving the inputted identification data and the inputted verification data,
**characterized in that** the processing section is configured to:
- identify, on the basis of the identification data, a sub-set of control parameters of the electrical device from among identifiable sub-sets of the control parameters of the electrical device,
- compare the verification data to a password related to the identified sub-set of the control parameters of the electrical device, the password related to the identified sub-set of the control parameters of the electrical device being different from passwords related to others of the identifiable sub-sets of the control parameters of the electrical device, and
- open access to the identified sub-set of the control parameters of the electrical device in response to a situation in which the verification data matches the password.

2. A user-interface according to claim 1, wherein each of the identifiable sub-sets of the control parameters of the electrical device contains only one of the control parameters of the electrical device.

3. A user-interface according to claim 1 or 2, wherein the password related to the identified sub-set of the control parameters of the electrical device is a result of a mathematic-logical operation directed to seed data comprising at least the identification data.

4. A user-interface according to any of claims 1-3, wherein the user-interface comprises a memory (103) encoded with the passwords related to the identifiable sub-sets of the control parameters of the electrical device.

5. A user-interface according to any of claims 1-3, wherein the processing section is configured compose the seed data and to direct the mathematic-logical operation to the seed data so as to generate the password.

6. A user-interface according to any of claims 1-5, wherein the password related to the identified sub-set of the control parameters of the electrical device is dependent on at least one of the following: an identifier of the electrical device, an identifier of a user, calendar data based on a clock system of the electrical device.

7. A user-interface according to claim 6, wherein the password related to the identified sub-set of the control parameters of the electrical device is a result of a mathematic-logical operation directed to seed data comprising the identification data and at least one of the following: an identifier of the electrical device, an identifier of a user, calendar data based on a clock system of the electrical device.

8. A user-interface according to any of claims 1-7, wherein the user-interface comprises a display (104), and the processing section is configured to control the display to show values of the identified sub-set of the control parameters of the electrical device in response to a situation in which the verification data matches the password.

9. A user-interface according to any of claims 1-8, wherein the processing section is configured to change, on the basis of update data inputted via the input-section, one or more values of the control parameters belonging to the identified sub-set in response to a situation in which the verification data matches the password.

10. A user-interface according to claim 9, wherein the processing section is configured to change the password related to the identified sub-set of the control parameters of the electrical device in response to a situation in which a pre-determined number of changes has been directed to the values of the control parameters belonging to the identified sub-set.

11. An electronic power converter (105) comprising:
- a power stage (106) for supplying voltages to windings of an electrical machine,
- a controller (107) arranged to control the power stage in accordance with control parameters of the electronic power converter, and
- a user-interface according to any of claims 1-10.

12. A mobile working machine (360) comprising:
- a combustion engine (361), and
- an electromechanical power transmission chain (362) between the combustion engine and one or more actuators of the mobile working machine,
wherein the electromechanical transmission chain comprises at least one electronic power converter (321) according to claim 11.

13. A mobile working machine according to claim 12, wherein the mobile working machine comprises a liquid cooling system (366) arranged to cool both the electromechanical power transmission chain (362) and a hydraulic system (367) of the mobile working machine.

14. A mobile working machine according to claim 12, wherein the mobile working machine comprises a liquid cooling system (366) arranged to cool both the electromechanical power transmission chain and the combustion engine.

15. A mobile working machine according to any of claims 12-14, wherein the password related to the identified sub-set of the control parameters of the electronic power converter is dependent on an identifier of the mobile working machine.

16. A method for controlling a user-interface of an electrical device, **characterized in that** the method comprises:
- identifying (201), on the basis of identification data received via the user-interface, a sub-set of control parameters of the electrical device from among identifiable sub-sets of the control parameters of the electrical device,
- comparing (202) verification data received via the user-interface to a password related to the identified sub-set of the control parameters of the electrical device, the password related to the identified sub-set of the control parameters of the electrical device being different from passwords related to others of the identifiable sub-sets of the control parameters of the electrical device, and
- opening (203) access to the identified sub-set of the control parameters of the electrical device in response to a situation in which the verification data matches the password.

17. A computer program for controlling a user-interface of an electrical device, **characterized in that** the computer program comprises computer executable instructions for controlling a programmable processor to:
- identify, on the basis of identification data received via the user-interface, a sub-set of control parameters of the electrical device from among identifiable sub-sets of the control parameters of the electrical device,
- compare verification data received via the user-interface to a password related to the identified sub-set of the control parameters of the electrical device, the password related to the identified sub-set of the control parameters of the electrical device being different from passwords related to others of the identifiable sub-sets of the control parameters of the electrical device, and
- open access to the identified sub-set of the control parameters of the electrical device in response to a situation in which the verification data matches the password.

18. A computer program product comprising a non-transitory computer readable medium encoded with a computer program according to claim 17.
